# EUROPÄISCHE PATENTSCHRIFT

(11) **EP 4 258 072 B1**
(45) Veröffentlichungstag und Bekanntmachung des Hinweises auf die Patenterteilung: **07.10.2026**
(21) Anmeldenummer: 23151680.8
(22) Anmeldetag: 16.01.2023
(51) Int. Cl.: G05B 23/02, G06F 17/40

(54) **VERFAHREN UND VORRICHTUNG ZUR AUTOMATISCHEN ERMITTLUNG EINES AKTUELLEN ZUSTANDS EINER IN BETRIEB BEFINDLICHEN ANLAGE**
METHOD AND DEVICE FOR AUTOMATICALLY DETERMINING THE CURRENT STATE OF AN OPERATING SYSTEM
PROCÉDÉ ET DISPOSITIF DE DÉTERMINATION AUTOMATIQUE D'UN ÉTAT ACTUEL D'UNE INSTALLATION EN FONCTIONNEMENT

(30) Priorität: 08.04.2022 DE 102022108584
(43) Veröffentlichungstag der Anmeldung: 11.10.2023
(73) Patentinhaber: Krones AG, 93073 Neutraubling (DE)
(72) Erfinder: Vogelsang, Christian, 93073 Neutraubling (DE)
(74) Vertreter: Grünecker Patent- und Rechtsanwälte PartG mbB

(56) Entgegenhaltungen:
- US-A1- 2014 365 178
- US-A1- 2019 384 257
- US-A1- 2022 004 182

## Beschreibung

Die Erfindung betrifft ein Verfahren zur automatischen Ermittlung eines aktuellen Zustands einer in Betrieb befindlichen Anlage gemäß dem Anspruch 1 und eine Vorrichtung zur automatischen Ermittlung eines aktuellen Zustands einer in Betrieb befindlichen Anlage gemäß dem Anspruch 9 aus prozesstechnischer Sichtweise.

### Stand der Technik

Eine herkömmliche Anlagendiagnose lässt keine schnelle und einfache Aussage über den aktuellen Zustand einer im Betrieb befindlichen Anlage zu.

Es sind intelligente Zustandsüberwachungs- und Fehlerdiagnosesysteme bekannt. EP 2 998 894 B1 offenbart beispielsweise ein System zur Zustandsüberwachung und Fehlerdiagnose einer Maschine mit einem Steuersystem, mit einer Datensammelfunktion zum Erfassen von Zeitverläufen von ausgewählten Variablen, mit einer Vorverarbeitungsfunktion zum individuellen Berechnen von spezifizierten Eigenschaften jedes der Zeitverläufe unter Verwendung von vorbestimmten dynamischen Modellen der Maschine, mit einer Analysefunktion zum Bewerten der spezifizierten Eigenschaften oder zum Erzeugen von Hypothesen eines Zustands von Maschinenkomponenten und mit einer Schlussfolgerungsfunktion zum Bestimmen des Zustands der Maschinenkomponenten aus den Hypothesen.

US 2019/384257 A1 offenbart ein Verfahren und eine Vorrichtung zum Lernen von Gesundheitsindikatoren unter Verwendung von Verstärkungslernen für eine vorausschauende Wartung.

### Aufgabe

Die Aufgabe der Erfindung besteht darin, ein Verfahren und eine Vorrichtung zur Verfügung zu stellen, mit denen eine Analyse eines verfahrenstechnischen Prozesses einer Anlage möglich ist.

### Lösung

Diese Aufgabe wird gelöst durch das Verfahren nach Anspruch 1 und die Vorrichtung nach Anspruch 9. Weitere Merkmale der Erfindung sind in den Unteransprüchen offenbart.

Die Anlage kann eine oder mehrere Maschinen oder Maschinenmodule umfassen.

Die ersten, zweiten und dritten Daten können Daten der gesamten Anlage umfassen oder Daten von einzelnen Maschinen oder Maschinenmodulen.

Der aktuelle Zustand der in Betrieb befindlichen Anlage kann angeben, ob die Anlage eine vorgegebene Anforderung vollständig erfüllt (beispielsweise die Prozesskennzahl gleich 100 ist) oder ob die vorgegebene Anforderung nur zum Teil (beispielsweise 0 < Prozesskennzahl < 100) oder gar nicht (beispielsweise Prozesskennzahl gleich 0) erfüllt wird.

Es können Anlagen verglichen werden, beispielsweise um eine Effizienz von technischen Änderungen, beispielsweise durch Serienstandänderungen, zu erkennen.

Das Erfassen, der ersten, zweiten und dritten Daten kann fortlaufend während des Betriebs der Anlage erfolgen oder während eines Zeitintervalls, beispielsweise ein Tag oder eine Stunde oder Ähnliches. Die ermittelte Prozesskennzahl kann dann eine entsprechende Zeitabhängigkeit aufweisen.

Das Erfassen der ersten, zweiten und dritten Daten kann mit dafür vorgesehener Sensorik der Anlage erfolgen. Beispielsweise kann die Sensorik diese Daten zur Ermittlung der Prozesskennzahl übermitteln, sodass beispielsweise die Ermittlung mittels der vorgesehenen Ermittlungsfunktion erfolgen kann.

Die Prozesskennzahl kann sich aus der Summe von Beiträgen der ersten, zweiten und dritten Daten ergeben. Beispielsweise können Werte der Prozesskennzahl in einem Bereich von 0 bis 100 liegen, wobei die Bereichsgrenzen eingeschlossen sein können. Die ersten Daten können zur Prozesskennzahl in einem Bereich von 0 bis 50 beitragen, wobei die Bereichsgrenzen eingeschlossen sein können. Die zweiten Daten können zur Prozesskennzahl in einem Bereich von 0 bis 30 beitragen, wobei die Bereichsgrenzen eingeschlossen sein können. Die dritten Daten können zur Prozesskennzahl in einem Bereich von 0 bis 20 beitragen, wobei die Bereichsgrenzen eingeschlossen sein können.

Die Prozesskennzahl kann eine Qualität der Anlage angeben. Die Prozesskennzahl kann eine objektive Analyse aus Fehlerhäufigkeiten und Veränderungen bestimmter Prozesszeiten darstellen.

Die Bezeichnung mit "erste", "zweite" und "dritte" dient in dieser Anmeldung lediglich der Unterscheidung von gleich benannten Merkmalen und hat sonst keine weitere einschränkende Bedeutung.

Eine Entscheidung über ein Veranlassen einer Wartung, einer Störungsbehebung und/oder von Reinigungs-, Wartungs- und/oder Reparaturarbeiten erfolgt durch Vergleichen der ermittelten Prozesskennzahl mit einer vorgegebenen Prozesskennzahl (Soll-Prozesskennzahl). Das Vergleichen und die Entscheidung kann automatisch mittels einer Steuerungsvorrichtung erfolgen. Ist die ermittelte Prozesskennzahl beispielsweise kleiner als oder gleich groß wie die vorgegebene Prozesskennzahl, so können eine Wartung, eine Störungsbehebung und/oder Reinigungs-, Wartungs- und/oder Reparaturarbeiten erfolgen. Ist die ermittelte Prozesskennzahl beispielsweise größer als die vorgegebene Prozesskennzahl, so auf eine Veranlassung von einer Wartung, einer Störungsbehebung und/oder von Reinigungs-, Wartungs- und/oder Reparaturarbeiten verzichtet werden.

Die ermittelte und die vorgegebene Prozesskennzahl werden einer Steuerungsvorrichtung zur Verfügung gestellt oder in einem Speicher der Steuerungsvorrichtung oder in einem Speicher, auf den die Steuerungsvorrichtung Zugriff hat, gespeichert, sodass das Veranlassen einer Wartung, einer Störungsbehebung und/oder von Reinigungs-, Wartungs- und/oder Reparaturarbeiten durch die Steuerungsvorrichtung erfolgt.

Die ermittelte und die vorgegebene Prozesskennzahl kann zudem oder alternativ auf einem Bildschirm dargestellt werden oder durch einen alternativen Speicherort (Cloud) für eine weitere Datenverarbeitung freigegeben werden. Statt durch die Steuerungsvorrichtung kann das Veranlassen einer Wartung, einer Störungsbehebung und/oder von Reinigungs-, Wartungs- und/oder Reparaturarbeiten dann auch durch einen menschlichen Bediener erfolgen.

Störungen, die zu einem Prozessstopp führen können, umfassen Unsterilität eines Sterilbereichs oder Trockenlaufen einer Pumpe.

Störungen, die zu einer zeitlichen Verlängerung des Prozesses führen können, können eine Überschreitung einer Aufheizzeit, ein verringerter Öffnungsgrad von Düsen, Laborprobenennahmen umfassen.

Störungen, die zu keiner zeitlichen Verlängerung und zu keinem Prozessstopp des Prozesses führen können, können ein Überlaufen der Behälter beim Füllvorgang umfassen.

Es kann eine Klassifizierung der ersten, zweiten und dritten Störungen in jeweils eine entsprechende erste Klasse, zweite Klasse, dritte Klasse erfolgen. Beispielsweise kann in der ersten, zweiten und dritten Klasse jeweils eine unterschiedliche Gewichtung erfolgen. Beispielsweise kann eine maximale erste Gewichtung in der ersten, zweiten und dritten Klasse insgesamt 50% der Prozesskennzahl betragen. Eine Gewichtung in der erste Klasse kann bei einer maximalen Prozesskennzahl von 100 beispielsweise 30 betragen, in der zweiten Klasse beispielsweise 15 und in der dritten Klasse beispielsweise 5.

Beim Erfassen der zweiten Daten kann folgendes erfasst werden:
- die Prozesszeit sämtlicher für das Anfahren (ramp-up), Produzieren und Abfahren (ramp-down) einer Anlage einsetzbaren Prozessschritte, wie einer Cleaning-in-Place (CIP), einer Sterilisation (SIP), eines Spül- oder Kühlschrittes, einer Produktionsunterbrechung oder eins Abfahrprozederes (ramp-down).

Beispielsweise kann eine maximale zweite Gewichtung 30% der Prozesskennzahl betragen. Beispielsweise kann eine maximale dritte Gewichtung 20% der Prozesskennzahl betragen.

Die Medien können Wasser, Luft, Dampf, Chemikalien, wie Lauge, Säure, Tensid, Peressigsäure, Wasserstoffperoxid umfassen. Die Energie bezieht sich auf die elektrische Energie.

Die Prozesskennzahl und/oder die ersten, zweiten und dritten Daten können gespeichert werden, beispielsweise für weitergehende Analysen oder dergleichen.

Ein Betriebszustand der Anlage während des Prozesses kann gespeichert werden. Der Betriebszustand kann Programmschritte der Anlage und/oder der von ihr umfassten Maschinen und/oder der von ihr umfassten Maschinenmodule umfassen.
kann bei der Analyse der ersten und/oder der zweiten und/oder der dritten Störung eine Zuordnung von Ereignissen in der Anlage erfolgen, die in zeitlicher Relation zueinander sind. Beispielsweise kann bei der Analyse eine Zuordnung zu Umgebungsbedingungen der Anlage erfolgen.

Die Ereignisse können Störungen in der Anlage und/oder Veränderungen an der Anlage umfassen. Eine zeitliche Relation kann bedeuten, dass ein erstes Ereignis zu einem ersten Zeitpunkt aufgetreten ist und ein zweites Ereignis bedingt, dass zu einem zweiten Zeitpunkt auftritt. Für eine zeitliche Relation kann eine maximale Zeitdauer angegeben werden.

Die Umgebungsbedingungen können die Umgebungstemperatur der Anlage (beispielsweise die Hallentemperatur), die Luftfeuchtigkeit, den Luftdruck und dergleichen umfassen.

Der zeitliche Verlauf der Prozesskennzahl kann gespeichert werden; er kann bei weiteren Analysen und/oder Vergleichen als vorangegangener zeitlicher Verlauf der Prozesskennzahl angesehen werden. Beispielsweise kann der zeitliche Verlauf der Prozesskennzahl mit einem vorangegangenen zeitlichen Verlauf der Prozesskennzahl verglichen werden.

Die Vorrichtung zur automatischen Ermittlung eines aktuellen Zustands einer in Betrieb befindlichen Anlage ist ausgebildet, ein Verfahren wie weiter oben oder weiter unten beschrieben auszuführen, wobei die Vorrichtung umfasst:
eine Erfassungsfunktion zur Erfassung der ersten, zweiten und/oder dritten Daten,
eine Ermittlungsfunktion zur Ermittlung der Prozesskennzahl basierend auf den ersten, zweiten und dritten Daten und/oder zur Erstellung des zeitlichen Verlaufs der Prozesskennzahl und eine Analysefunktion zur Analyse der ersten und/oder der zweiten und/oder der dritten Störung.

### Kurze Figurenbeschreibung

Die beigefügten Figuren dienen zum besseren Verständnis und zur Veranschaulichung von Aspekten der Erfindung. Dabei zeigt:
Figur 1 ein schematisches Blockdiagramm zur Ermittlung einer Prozesskennzahl und
Figur 2 einen zeitlichen Verlauf einer Prozesskennzahl.

### Ausführliche Figurenbeschreibung

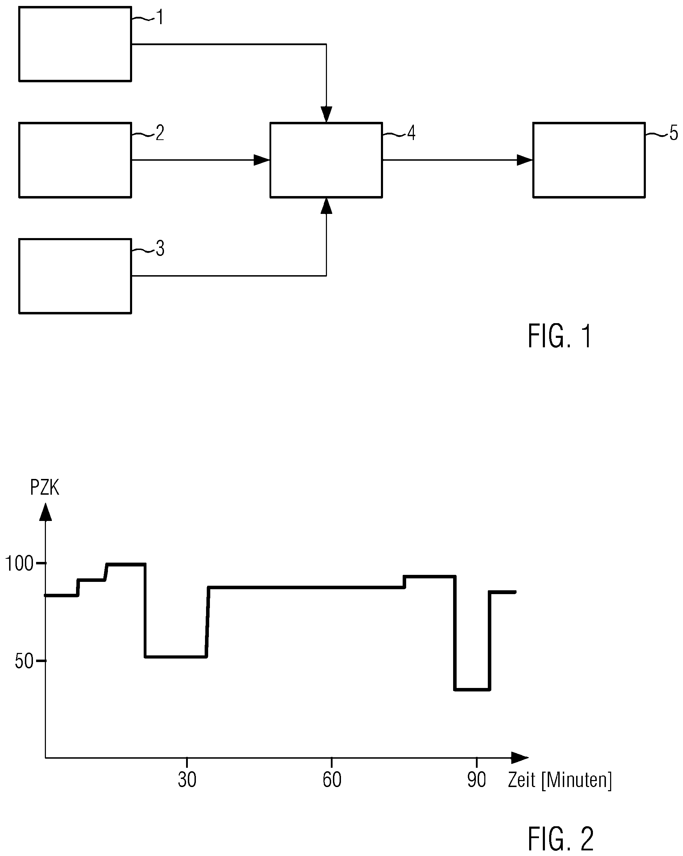

Die Figur 1 zeigt ein schematisches Blockdiagramm zur Ermittlung einer Prozesskennzahl in einer Anlage. Im Block 1 erfolgt ein Erfassen von ersten Daten betreffend eine oder mehrere Störungen in der Anlage während eines Prozesses. Im Block 2 erfolgt ein Erfassen von zweiten Daten betreffend eine Prozesszeit in der Anlage während des Prozesses. Im Block 3 erfolgt ein Erfassen von dritten Daten betreffend einen Medienverbrauch in der Anlage während des Prozesses.

Basierend auf diesen ersten, zweiten und dritten Daten erfolgt im Block 4 ein Ermitteln einer Prozesskennzahl. Im Block 5 erfolgt eine Ausgabe der ermittelten Prozesskennzahl, beispielsweise in Abhängigkeit von der Zeit. Mittels der ermittelten Prozesskennzahl kann beispielsweise eine objektive Analyse aus Fehlerhäufigkeiten und Veränderungen bestimmter Prozesszeiten dargestellt werden. Dazu kann die ermittelte Prozesskennzahl mit einer vorgegebenen Prozesskennzahl verglichen werden.

Beispielsweise können die ermittelte und die vorgegebene Prozesskennzahl einer Steuerungsvorrichtung zur Verfügung gestellt oder in einem Speicher der Steuerungsvorrichtung oder in einem Speicher, auf den die Steuerungsvorrichtung Zugriff hat, gespeichert werden, sodass das beispielsweise ein Veranlassen einer Wartung, einer Störungsbehebung und/oder von Reinigungs-, Wartungs- und/oder Reparaturarbeiten durch die Steuerungsvorrichtung erfolgen kann.

Die ermittelte und die vorgegebene Prozesskennzahl können zudem oder alternativ auf einem Bildschirm dargestellt werden. Statt durch die Steuerungsvorrichtung kann das Veranlassen einer Wartung, einer Störungsbehebung und/oder von Reinigungs-, Wartungs- und/oder Reparaturarbeiten dann auch durch einen menschlichen Bediener erfolgen.

Die Figur 2 zeigt einen zeitlichen Verlauf einer Prozesskennzahl PZK, wobei die Zeit hierbei in Stunden dargestellt ist. Die Prozesskennzahl nimmt in der exemplarischen Darstellung zunächst von einem Wert von etwa 80 stufenweise bis zu 100 zu, danach erfolgt eine Abnahme auf etwa 50 und bleibt für einige Zeit, ca. 15 Stunden, bestehen. Anschließen erfolgt ein Anstieg auf etwa 80 der für etwa 40 Stunden bleibt. Danach erfolgt ein Anstieg auf etwa 90, der für ca. 10 Stunden beibehalten wird, bevor eine Abnahme auf 30 und dann ein Anstieg auf 75 erfolgt.

## Patentansprüche

1. Verfahren zur automatischen Ermittlung eines aktuellen Zustands einer in Betrieb befindlichen Anlage, wobei das Verfahren umfasst:
- Erfassen (1) von ersten Daten betreffend eine oder mehrere Störungen in der Anlage während eines Prozesses mittels einer Erfassungsfunktion,
- Erfassen (2) von zweiten Daten betreffend eine Prozesszeit in der Anlage während des Prozesses mittels der Erfassungsfunktion,
**gekennzeichnet durch**
- Erfassen (3) von dritten Daten betreffend einen Medien- und Energieverbrauch in der Anlage während des Prozesses mittels der Erfassungsfunktion, wobei beim Erfassen (3) der dritten Daten eine Messung einer verwendeten Menge von Medien und elektrischer Energie erfolgt,
- Ermitteln (4) einer Prozesskennzahl basierend auf den ersten, zweiten und dritten Daten mittels einer Ermittlungsfunktion,
- Verwenden der ermittelten Prozesskennzahl zur Entscheidung über ein Veranlassen einer Wartung, einer Störungsbehebung und/oder von Reinigungs-, Wartungs- und/oder Reparaturarbeiten, wobei die Entscheidung durch Vergleichen der ermittelten Prozesskennzahl mit einer vorgegebenen Prozesskennzahl erfolgt, wobei die ermittelte und die vorgegebene Prozesskennzahl einer Steuerungsvorrichtung zur Verfügung gestellt werden, wobei das Veranlassen der Wartung, der Störungsbehebung und/oder der Reinigungs-, Wartungs- und/oder Reparaturarbeiten durch die Steuerungsvorrichtung erfolgt,
- Erstellen eines zeitlichen Verlaufs der Prozesskennzahl mittels der Ermittlungsfunktion,
wobei beim Erfassen (1) der ersten Daten folgendes erfasst wird:
- erste Störungen in der Anlage, die zu einem Prozessstopp des Prozesses führen, wobei die ersten Störungen eine Unsterilität eines Sterilbereichs oder ein Trockenlaufen einer Pumpe umfassen, und/oder
- zweite Störungen in der Anlage, die zu einer zeitlichen Verlängerung des Prozesses führen und/oder
- dritte Störungen in der Anlage, die zu keiner zeitlichen Verlängerung und zu keinem Prozessstopp des Prozesses führen,
wobei eine Analyse der ersten und/oder der zweiten und/oder der dritten Störung mittels einer Analysefunktion erfolgt.

2. Das Verfahren nach Anspruch 1, wobei eine Klassifizierung der ersten, zweiten und dritten Störungen in jeweils eine entsprechende erste Klasse, zweite Klasse, dritte Klasse erfolgt, wobei beispielsweise in der ersten, zweiten und dritten Klasse jeweils eine unterschiedliche Gewichtung erfolgt, wobei beispielsweise eine maximale erste Gewichtung in der ersten, zweiten und dritten Klasse insgesamt 50% der Prozesskennzahl beträgt.

3. Das Verfahren nach Anspruch 1 oder 2, wobei beim Erfassen (2) der zweiten Daten folgendes erfasst wird:
- die Prozesszeit eines ramp-up der Anlage und/oder einer Cleaning in Place, CIP, und/oder einer Sterilisation, SIP und/oder eines Spülschrittes und/oder eines Kühlschrittes und/oder einer Produktionsunterbrechung und/oder eines ramp-down der Anlage,
wobei beispielsweise eine maximale zweite Gewichtung 30% der Prozesskennzahl beträgt.

4. Das Verfahren nach einem der Ansprüche 1 bis 3, wobei eine maximale dritte Gewichtung 20% der Prozesskennzahl beträgt.

5. Das Verfahren nach einem der Ansprüche 1 bis 4, wobei die Prozesskennzahl und/oder die ersten, zweiten und dritten Daten gespeichert werden.

6. Das Verfahren nach einem der Ansprüche 1 bis 5, wobei ein Betriebszustand der Anlage während des Prozesses gespeichert wird.

7. Das Verfahren nach einem der Ansprüche 1 bis 6, wobei bei der Analyse eine Zuordnung von Ereignissen in der Anlage erfolgt, die in zeitlicher Relation sind, wobei beispielsweise bei der Analyse eine Zuordnung zu Umgebungsbedingungen der Anlage erfolgt.

8. Das Verfahren nach einem der Ansprüche 1 bis 7, wobei der zeitliche Verlauf der Prozesskennzahl mit einem vorangegangenen zeitlichen Verlauf der Prozesskennzahl verglichen wird.

9. Vorrichtung zur automatischen Ermittlung eines aktuellen Zustands einer in Betrieb befindlichen Anlage, wobei die Vorrichtung ausgebildet ist, ein Verfahren nach einem der Ansprüche 1 bis 8 auszuführen, wobei die Vorrichtung umfasst:
eine Erfassungsfunktion zur Erfassung der ersten, zweiten und/oder dritten Daten,
eine Ermittlungsfunktion zur Ermittlung der Prozesskennzahl basierend auf den ersten, zweiten und dritten Daten und/oder zur Erstellung des zeitlichen Verlaufs der Prozesskennzahl und
eine Analysefunktion zur Analyse der ersten und/oder der zweiten und/oder der dritten Störung.

## Claims

1. Method for automatically determining a current condition of a system in operation, the method comprising:
- acquiring (1) first data relating to one or more faults in the system during a process by an acquisition function,
- acquiring (2) second data relating to a process time in the system during the process by the acquisition function,
**characterised by**
- acquiring (3) third data relating to media and energy consumption in the system during the process by the acquisition function, wherein during the acquiring (3) of the third data, a measurement of a quantity of the media or electrical energy used takes place,
- determining (4) a process indicator number based on the first, second and third data by a determination function,
- using the process indicator number determined for deciding whether initiating a maintenance, a troubleshooting and/or cleaning, service and/or repair works, wherein the deciding is made by comparing the process indicator number determined to a process indicator number specified, wherein the process indicator number determined and the one specified are made available to a control device, wherein the initiating of the maintenance, the troubleshooting and/or the cleaning, service and/or repair works is carried out by the control device,
- creating a time profile of the process indicator number by the determination function,
wherein during the acquiring (1) of the first data, the following is acquired:
- first faults in the system which lead to a process stoppage of the process, wherein the first faults comprise a sterile region that is non-sterile or a pump running dry, and/or
- second faults in the system which lead to an extension of the process in time and/or
- third faults in the system that do not result in any extension in time and in no process stoppage of the process,
wherein an analysis of the first and/or the second and/or the third fault takes place by an analysis function.

2. **The** method according to claim 1, where the first, second and third faults each are classified into a respective first class, second class, third class, where, for example, a different weighting takes place in the first, second and third class, where, for example, a maximum first weighting in the first, second and third classes totals 50% of the process indicator number.

3. The method according claim 1 or 2, where during the acquisition (2) of the second data the following is acquired:
- the process time of a ramp-up of the system and/or cleaning in place, CIP, and/or sterilisation, SIP, and/or a rinsing step and/or a cooling step and/or a production interruption and/or a ramp-down of the system,
where, for example, a maximum second weighting totals 30% of the process indicator number.

4. The method according to one of claims 1 to 3, where a maximum third weighting amounts to 20% of the process indicator number.

5. The method according to one of the claims 1 to 4, where the process indicator number and/or the first, second and third data are stored.

6. The method according to one of the claims 1 to 5, where an operating state of the system during the process is stored.

7. The method according to one of the claims 1 to 6, where during the analysis an association of events in the system takes place that are related to one another in terms of time, where, for example, an association to the environmental conditions of the system takes place during the analysis.

8. The method according to one of the claims 1 to 7, where the time profile of the process indicator number is compared with a preceding time profile of the process indicator number.

9. Device for automatically determining a current condition of a system in operation, where the device is configured to carry out a method according to one of the claims 1 to 8, where the device comprises:
an acquisition function for acquiring the first, second and/or third data,
a determination function for determining the process indicator number based on the first, second and/or third data and/or for creating the time profile of the process indicator number and
an analysis function for analysing the first and/or the second and/or the third fault.

## Revendications

1. Procédé de détermination automatique de l'état actuel d'une installation en fonctionnement, dans lequel le procédé comprend :
- la détection (1) de premières données concernant un ou plusieurs dysfonctionnements dans l'installation pendant un processus au moyen d'une fonction de détection,
- la détection (2) de deuxièmes données concernant une durée de processus dans l'installation pendant le processus au moyen de la fonction de détection,
**caractérisé par**
- la détection (3) de troisièmes données concernant la consommation de fluides et d'énergie dans l'installation pendant le processus au moyen de la fonction de détection, dans lequel une mesure des quantités consommées de fluides et d'énergie électrique est effectuée lors de la détection (3) des troisièmes données,
- la détermination (4) d'un indicateur de processus sur la base des premières, deuxièmes et troisièmes données au moyen d'une fonction de détermination,
- l'utilisation de l'indicateur de processus déterminé pour prendre une décision concernant le déclenchement d'une maintenance, d'un dépannage et/ou de travaux de nettoyage, d'entretien et/ou de réparation, dans lequel la décision est prise en comparant l'indicateur de processus déterminé à un indicateur de processus prédéfini, dans lequel l'indicateur de processus déterminé et l'indicateur de processus prédéfini d'un dispositif de contrôle sont mis à disposition, dans lequel le déclenchement de la maintenance, du dépannage et/ou des travaux de nettoyage, d'entretien et/ou de réparation est effectué par le dispositif de contrôle,
- la génération d'une progression temporelle de l'indicateur de processus au moyen de la fonction de détermination, dans lequel, lors de la détection (1) des premières données, les éléments suivants sont détectés :
- des premiers dysfonctionnements dans l'installation qui entraînent un arrêt du processus, dans lequel les premiers dysfonctionnements incluent un défaut de stérilité dans une zone stérile ou un fonctionnement à sec d'une pompe, et/ou
- des deuxièmes dysfonctionnements dans l'installation qui entraînent une prolongation temporelle du processus, et/ou
- des troisièmes dysfonctionnements dans l'installation qui n'entraînent ni une prolongation temporelle, ni un arrêt du processus,
dans lequel une analyse des premier et/ou deuxième et/ou troisième dysfonctionnements est effectuée au moyen d'une fonction d'analyse.

2. Procédé selon la revendication 1, dans lequel une classification des premier, deuxième et troisième dysfonctionnements est effectuée respectivement dans une première, une deuxième et une troisième classes correspondantes, dans lequel une pondération différente est par exemple appliquée dans les première, deuxième et troisième classes respectives, dans lequel une première pondération maximale dans les première, deuxième et troisième classes représente par exemple un total de 50 % de l'indicateur de processus.

3. Procédé selon la revendication 1 ou 2, dans lequel, lors de la détection (2) des deuxièmes données, ce qui suit est détecté :
- la durée de processus d'une augmentation de cadence de l'installation, et/ou d'un nettoyage en place, NEP, et/ou d'une stérilisation en place, SEP, et/ou d'une étape de rinçage, et/ou d'une étape de refroidissement, et/ou d'une interruption de production, et/ou d'une diminution de cadence de l'installation,
dans lequel une deuxième pondération maximale est par exemple de 30 % de l'indicateur de processus.

4. Procédé selon l'une des revendications 1 à 3, dans lequel une troisième pondération maximale représente 20 % de l'indicateur de processus.

5. Procédé selon l'une des revendications 1 à 4, dans lequel sont sauvegardés l'indicateur de processus et/ou les premières, deuxièmes et troisièmes données.

6. Procédé selon l'une des revendications 1 à 5, dans lequel l'état de fonctionnement de l'installation est sauvegardé pendant le processus.

7. Procédé selon l'une des revendications 1 à 6, dans lequel une catégorisation d'événements dans l'installation qui sont en relation temporelle est effectuée lors de l'analyse, dans lequel par exemple une catégorisation des conditions environnementales de l'installation est effectuée lors de l'analyse.

8. Procédé selon l'une des revendications 1 à 7, dans lequel la progression temporelle de l'indicateur de processus est comparée à une progression temporelle antérieure de l'indicateur de processus.

9. Dispositif destiné à la détermination automatique de l'état actuel d'une installation en fonctionnement, dans lequel le dispositif est conçu pour mettre en œuvre un procédé selon l'une des revendications 1 à 8, dans lequel le dispositif comprend :
une fonction de détection pour la détection des premières, deuxièmes et/ou troisièmes données,
une fonction de détermination pour déterminer l'indicateur de processus sur la base des premières, deuxièmes et troisièmes données et/ou pour générer la progression temporelle de l'indicateur de processus, et
une fonction d'analyse pour l'analyse du premier et/ou deuxième et/ou troisième dysfonctionnement.
